(19) **Europäisches Patentamt European Patent Office Office européen des brevets**

(11) **EP 4 718 283 A1**

(12) **EUROPEAN PATENT APPLICATION**

(43) Date of publication:
**01.04.2026 Bulletin 2026/14**

(21) Application number: **24202638.3**

(22) Date of filing: **25.09.2024**

(51) International Patent Classification (IPC):
**G06F 16/906** (2019.01)   **G06N 3/00** (2023.01)
**G06N 20/00** (2019.01)

(52) Cooperative Patent Classification (CPC):
**G06F 16/906; G06N 3/00; G06N 3/045; G06N 3/08; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
- **Khoreva, Anna**
  **70197 Stuttgart (DE)**
- **Roth, Karsten**
  **72070 Tübingen (DE)**
- **Bini, Massimo**
  **72072 Tübingen (DE)**

Remarks:
Amended claims in accordance with Rule 137(2) EPC.

(54) **DEVICE AND COMPUTER IMPLEMENTED METHOD FOR ADAPTING A MODEL TO TASKS**

(57)    Device, data structure, and method for adapting model to tasks, wherein the method comprises providing the model, wherein the model comprises an in particular linear layer for mapping a multidimensional input of the layer depending on weights to a multidimensional output of the layer, wherein the model comprises experts (208, 210) and a router gate (204) for adapting the model to different tasks, wherein the method comprises providing the input to the router gate (204), determining an output of the experts (208, 210) depending on an output of the router gate (204) in response to the input, modifying the model depending on the output of the experts (208, 210), mapping the input with the modified layer to the output of the model, training a first expert (208) of the experts with a first training method depending on the output of the model, and training a second expert (210) of the experts with a second training method depending on the output of the model, and maintaining the weights and the second expert (210) unchanged in the training with the first training method, and maintaining the weights and the first expert (208) unchanged in the training with the second training method.

Fig. 2

EP 4 718 283 A1

**Description**

Background

The invention relates to a device and a computer-implemented method for adapting a model to tasks.

In deep learning, a model may be adapted to tasks.

R. A. Jacobs, M. I. Jordan, S. J. Nowlan, and G. E. Hinton, "Adaptive mixtures of local experts," Neural Computation, vol. 3, pp. 79-87, 1991 describes Mixture of Experts (MoE). MoE is a neural network architecture type that allows to combine model parts for different tasks into one model. This is achieved through a routing mechanism that allows to train separate model parts - named experts - separately from the rest for a respective task. The routing mechanism allows each expert to specialize in specific data types that are selected by a learnable router gating network.

Training or finetuning a MoE model requires a very large memory capacity for the large number of parameters needed to store all the separate experts.

W. Fedus, B. Zoph, and N. Shazeer, "Switch transformers: Scaling to trillion parameter models with simple and efficient sparsity," 2022 discloses Switch Transformer.

A. Vaswani, N. Shazeer, N. Parmar, J. Uszkoreit, L. Jones, A. N. Gomez, L. Kaiser, and I. Polosukhin, "Attention is all you need," 2023 discloses transformer architectures.

Switch Transformer has been presented as an application of MoE on transformers architectures, showing how performance increases by replacing the feed-feed forward layer at the end of each attention module with an MoE layer.

Training the Switch Transformer with a large number of experts requires a large amount of memory.

Disclosure of the invention

The device and the computer-implemented method efficiently adapt a model to tasks. Exemplary tasks are

outputting, depending on different types of input data, a classification,
outputting, depending on different types of input data, a digital image,
outputting, depending on different types of input data, audio data,
outputting, depending on different types of input data video data, or
outputting, depending on different types of input data, virtual sensor data.

The method for adapting a model to tasks comprises providing the model, wherein the model comprises an in particular linear layer for mapping a multidimensional input of the layer depending on weights to a multidimensional output of the layer, wherein the model comprises experts and a router gate for adapting the model to different tasks, wherein the method comprises providing the input to the router gate, determining an output of the experts depending on an output of the router gate in response to the input, modifying the model depending on the output of the experts, mapping the input with the modified layer to the output of the model, training a first expert of the experts with a first training method depending on the output of the model, and training a second expert of the experts with a second training method depending on the output of the model, and maintaining the weights and the second expert unchanged in the training with the first training method, and maintaining the weights and the first expert unchanged in the training with the second training method.

Modifying the model may comprise determining the output of the first expert weight-wise, modifying the weights of the layer depending on a weight-wise summation of the weights with the output of the first expert, and determining the output of the model depending on the modified weights.

Modifying the model may comprise determining a multidimensional output of the first expert according to the dimension of the multidimensional output of the layer, and determining the output of the model depending on a dimension-wise summation of the multidimensional output of layer and the multidimensional output of the first expert.

Modifying the model may comprise determining the output of the second expert weight-wise, modifying the weights of the layer depending on a weight-wise multiplication of the weights with the output of the second expert, and determining the output of the model depending on the modified weights.

Modifying the model may comprise determining a multidimensional output of the second expert according to the dimension of the multidimensional output of the layer, and determining the output of the model depending on a dimension-wise summation of the multidimensional output of layer and the multidimensional output of the second expert.

The method may comprise training the router gate depending on the output of the model.

The output of the first expert may represent a transformation matrix for a matrix addition with a weight matrix representing the weights, wherein training the first expert comprises learning the transformation matrix.

The method may comprise providing multiple experts with a respective transformation matrix for the matrix addition, wherein the ranks of the transformation matrices provided for the matrix addition differ from each other.

The output of the second expert may represent a transformation matrix for a matrix multiplication with a weight matrix representing the weights, wherein training the second expert comprises learning the transformation matrix.

The method may comprise providing multiple experts with a common matrix for the matrix multiplication, providing the multiple experts with different scalars for scaling the common transformation matrix to the transformation matrix, and training the scalar of the experts depending on the output of the model.

The model may comprise a plurality of in particular linear layers, wherein adapting the model comprises adapting the layers with respective experts and respective router gates, wherein adapting the layers comprises providing the input of the respective layer to the router gate of the respective layer, determining an output of the experts of the respective layer depending on an output of the router gate of the respective layer in response to the input of the respective layer, and modifying the model depending on the output of the experts of the respective layer, and training the experts of the respective layers of the model.

The model may be configured to determine the input depending on an input of the model, wherein the training data comprises pairs of an input of the model and a ground truth for the output of the model, wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

The method may comprise receiving an input of the model that comprises or represents information about a technical system, determining an output of the adapted model that the adapted model outputs for the input of the model, and outputting the output of the adapted model and/or operating the technical system depending on the output or the adapted model.

A device for adapting a model to tasks comprises at least one processor and at least one memory, wherein the at least one memory comprises instructions that are executable by the at least one processor, and that, when executed by the at least one processor cause the device to execute the method.

A computer program may be provided, wherein the computer program comprises instructions that are executable by a computer and that, when executed by the computer, cause the computer to execute the method.

A data structure, in particular a computer implemented data structure, for adapting a model to tasks, may be provided, wherein the data structure comprises at least one data field for the model, wherein the model comprises an in particular linear layer for mapping a multidimensional input of the layer depending on weights to a multidimensional output of the layer, wherein the model comprises experts and a router gate for adapting the model to different tasks, wherein the data structure comprises at least one data filed for the input to the router gate, wherein the data structure comprises at least one data filed for an output of the experts determined depending on an output of the router gate in response to the input, wherein the data structure comprises at least one data filed for a modified layer determined by modifying the model depending on the output of the experts, wherein the data structure comprises at least one data filed for training a first expert of the experts with a first training method depending on the output of the model, and wherein the data structure comprises at least one data filed for training a second expert of the experts with a second training method depending on the output of the model, and maintaining the weights and the second expert unchanged in the training with the first training method, and maintaining the weights and the first expert unchanged in the training with the second training method.

Further embodiments are derived from the following description and the drawing. In the drawing,

Fig. 1 schematically depicts a device for adapting a model to tasks,
Fig. 2 schematically depicts a part of a first example of the model,
Fig. 3 schematically depicts a part of a second example of the model,
Fig. 4 schematically depicts a part of a third example of the model,
Fig. 5 schematically depicts a part of a fourth example of the model,
Fig. 6 schematically depicts a flow chart comprising steps of a method for adapting the model to the tasks,
Fig. 7 schematically depicts a data structure for adapting the model to tasks.

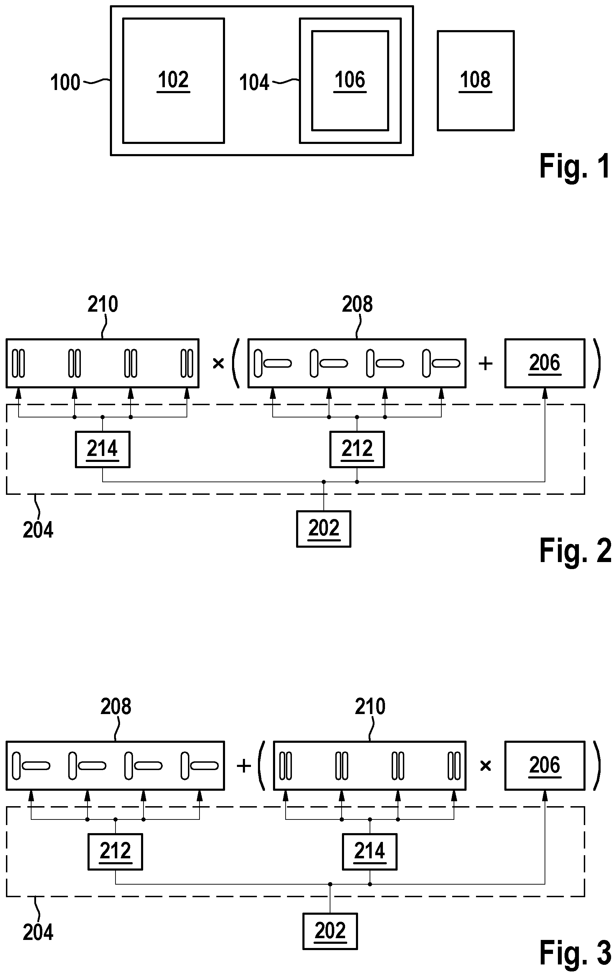

Figure 1 schematically depicts a device 100. The device 100 comprises at least one processor 102 and at least one memory 104. The at least one memory 104 stores instructions. The at least one processor 102 is configured to execute the instructions.

The device 100 is configured for executing a method for adapting a model 106 to tasks. The instructions, when executed by the at least one processor 102, cause the device 100 to execute the method.

In the example, the at least one memory 104 stores the model 106.

The model 106 may be configured to receive input that comprises or represents information about a technical system 108. The model 106 may be configured to determine an output of the model 106 for operating the technical system 108 depending on the input of the model 106.

The technical system 108 may be a robot, in particular a vehicle. The technical system 108 may be a computer controlled machine, in particular a manufacturing machine, a power tool, a household appliance, or a personal assist system.

The model 106 may be configured for outputting, depending on the input of the model 106, a classification, a digital image, audio data, or video data, or virtual sensor data. The input may comprise sensor data, e.g. a digital image, audio data, or video data, radar data, LiDAR data, ultrasonic sensor data, motion sensor data, or thermal image sensor data. The input may comprise time series data.

The model 106 may be configured for be used for classifying the sensor data, detecting the presence of objects in the sensor data or performing a semantic segmentation on the sensor data, e.g. regarding traffic signs, road surfaces, pedestrians, or vehicles. This may be carried out based on low-level features, e.g. edges or pixel attributes for images.

The model 106 may be configured for determining a continuous value or multiple continuous values, i.e., perform a regression analysis, e.g., regarding a distance, a velocity, an acceleration, or tracking an item, e.g., an object, in the data. This may be carried out based on low-level features, e.g. edges or pixel attributes for images.

According to an example, the model 106 is a neural network that is configured to determine the output of the model 106 depending on an input of the model 106.

The neural network comprises at least on layer, that is configured to determine an output of the layer depending on an input of the layer.

According to an example, the neural network comprises a series of layers. The series of layers comprises an input layer, that is configured to receive the input of the model 106. The series of layers comprises an output layer that is configured to output the output of the model 106. The neural network comprises at least one layer I between the input layer and the output layers. A layer I that is arranged between the input layer and the output layer is configured to determine an output y of the layer depending on an input x of the layer, weights $W \in \mathbb{R}^{d \times f}$ and an optional bias $b \in \mathbb{R}^f$:

$$y = W^T x + b$$

According to an example, the input x of a layer $l_i$ of a series of n layers $l_i$, $i = 1, ..., n$ that are arranged between the input layer and the output layer is determined with an activation function $\phi$ depending on the output $y_i$ of a layer $l_{i-1}$ preceding the layer $l_i$ $x = \phi(y)$ a plurality of layers.

According to the example, the model 106 is pretrained. According to the example, the weights W are pretrained.

The input of the first layer $l_0$ is the input of the model 106. The output of the last layer $l_n$ is the output of the model 106.

In the output layer, model parts for different tasks - named experts - are arranged. The model 106 comprises a routing mechanism that allows to train the separate model parts - named experts - separately for a respective task. The routing mechanism allows each expert to specialize in specific data types. The model 106 comprises a router gating network. The router gating network is learnable. The router gating network is for example a neural network. The specific data types for the respective expert are selected by the router gating network.

The experts may be adapted with different Parameter Efficient FineTuning (PEFT) methods.

Exemplary summation based PEFT methods that are

LoRA: E. J. Hu, Y. Shen, P. Wallis, Z. Allen-Zhu, Y. Li, S. Wang, L. Wang, and W. Chen, "LoRA: Low-rank adaptation of large language models," in ICLR, 2022.

VeRA: D. J. Kopiczko, T. Blankevoort, and Y. M. Asano, "VeRA: Vector-based Random Matrix Adaptation," Oct. 2023. arXiv:2310.11454 [cs].

DyLoRA: M. Valipour, M. Rezagholizadeh, I. Kobyzev, and A. Ghodsi, "DyLoRA: Parameter Efficient Tuning of Pre-trained Models using Dynamic Search-Free Low-Rank Adaptation," Apr. 2023. arXiv:2210.07558 [cs].

AdaLoRA: Q. Zhang, M. Chen, A. Bukharin, P. He, Y. Cheng, W. Chen, and T. Zhao, "Adaptive Budget Allocation for Parameter-Efficient Fine-Tuning," Mar. 2023. arXiv:2303.10512 [cs].

DoRA: S.-Y. Liu, C.-Y. Wang, H. Yin, P. Molchanov, Y.-C. F. Wang, K.-T. Cheng, and M.-H. Chen, "Dora: Weight-decomposed low-rank adaptation," 2024.

The summation based PEFT methods update the original network's weights via matrix-addition:

$$W' = W + AB$$

where the low rank matrix AB has learnable parameters.

Exemplary multiplication based PEFT methods update the original network's weights via matrix-multiplication:

$$W' = HW$$

where H is a learnable parameter-efficient transformation.

An example for a multiplication based PEFT method is OFT: Z. Qiu, W. Liu, H. Feng, Y. Xue, Y. Feng, Z. Liu, D. Zhang, A. Weller, and B. Schölkopf, "Controlling text-to-image diffusion by orthogonal finetuning," arXiv preprint arXiv:2306.07280, 2023.

An example for a multiplication based PEFT method is ETHER and ETHER+: M. Bini, K. Roth, Z. Akata, and A. Khoreva, "Ether: Efficient finetuning of large-scale models with hyperplane reflections," 2024.

According to ETHER, the multiplication based PEFT method comprises a first transformation for adapting the model 106 to the task.

The first transformation represents a hyperplane reflection, in which a hyperplane H reflects a weight $r$ of a weight vector $w \in \mathbb{R}^d$. The weight vector $w$ is a vector of length L. The weight vector w comprises the weights from the weights $W$ that weigh the elements of the multidimensional input $x \in \mathbb{R}^d$ for a single dimension of the output $y$. The reflected weight r is obtained via a transformation matrix $H \in \mathbb{R}^{d \times d}$ :

$$H = I - 2uu^T$$

wherein $u \in \mathbb{R}^d$ is a learnable hyperplane unit normal vector and $uu^T$ is the outer product of the vector $u$ with the transposed $u^T$ of the vector $u$. This means, the vector $u$ has unit length, i.e., the square of the d elements $u_i$ of the vector $u$ sum up to one: $u_1^2 + u_2^2 + \cdots + u_d^2 = 1$ .

The matrix $H$ corresponding to the first transformation has a constant Frobenius distance with respect to the Identity matrix $I \in \mathbb{R}^{d \times d}$ .

According to the example, the reflected weight r is a vector that has to retain length L.

The reflected weight $r$ of the weight vector w is determined depending on the transformation:

$$Hw = (I - 2uu^T)w = w - 2u(u^Tw)$$

Based on the transformation $H$, the output y of the adapted layer depends on the forward pass $(HW)^T x + b$.

According to ETHER+ the multiplication based PEFT method comprises a second exemplary transformation for adapting the model 106 to the task.

The second transformation involves two interacting hyperplanes, a first hyperplane $H_1$ and a second hyperplane $H_2$. For adapting a layer, two distinct transformation matrices $H^+$ and $\hat{H}^+$ of the second transformation are learned.

The first hyperplane $H_1$ and the second hyperplane $H_2$ are used for a transformation, involving the interaction of the first hyperplane $H_1$ and the second hyperplane $H_2$ of a weight vector $w \in \mathbb{R}^d$ for determining a resulting transformed weight r. The resulting transformed weight r does not need to retain length L. The length of the resulting transformed weight r is not equal to the length L. The weight vector w comprises the weights from the weights W that weigh the elements of the multidimensional input $x \in \mathbb{R}^d$ for a single dimension of the output $y$.

The output y of the adapted layer depends on the forward pass $(H^+W\hat{H}^+)^T x + b$.

The transformation matrix $H^+ \in \mathbb{R}^{d \times d}$ is obtained as:

$$H^+ = I - uu^T + vv^T$$

wherein $u \in \mathbb{R}^d$ is a first learnable hyperplane unit normal vector associated with the first hyperplane $H_1$, wherein $v \in \mathbb{R}^d$ is a second learnable hyperplane unit normal vector associated with the second hyperplane $H_2$, wherein $uu^T$ is the outer product of the first vector $u$ with the transposed $u^T$ of the first vector $u$, and wherein $vv^T$ is the outer product of the second vector $v$ with the transposed $v^T$ of the second vector v. The first vector $u$ has unit length, i.e., the square of the d elements $u_i$ of the vector $u$ sum up to one: $u_1^2 + u_2^2 + \cdots + u_d^2 = 1$. The second vector v has unit length, i.e., the square of the d elements $v_i$ of the vector v sum up to one: $v_1^2 + v_2^2 + \cdots + v_d^2 = 1$ .

The matrix $H^+$ of the second transformation has a bounded Frobenius distance with respect to the Identity matrix $I \in \mathbb{R}^{d \times d}$ .

The transformation matrix $H^+$ of the column weight vector w is determined depending on:

$$H^+ w = (I - uu^T + vv^T)w = w - u(u^T w) + v(v^T w)$$

The transformation matrix $\widehat{H}^+ \in \mathbb{R}^{f \times f}$ is obtained accordingly as:

$$\widehat{H}^+ = I - \hat{u}\hat{u}^T + \hat{v}\hat{v}^T$$

with a learnable first vector $\hat{u} \in \mathbb{R}^f$ and a learnable second vector $\hat{v} \in \mathbb{R}^f$ . The first vector $\hat{u}$ has unit length. The second vector $\hat{v}$ has unit length.

The matrix $\hat{H}^+$ of the second transformation has a bounded Frobenius distance with respect to the Identity matrix $I \in \mathbb{R}^{f \times f}$ .

The transformation matrix $\hat{H}^+$ of the row weight vector $\widehat{w}^T \in \mathbb{R}^f$ is determined depending on:

$$\widehat{w}^T \widehat{H}^+ = \widehat{w}^T(I - \hat{u}\hat{u}^T + \hat{v}\hat{v}^T) = \widehat{w}^T - (\widehat{w}^T \hat{u})\hat{u}^T + (\widehat{w}^T \hat{v})\hat{v}^T$$

The transformation matrices $H^+$, $\hat{H}^+$ are learned with a method for adapting the model 106. This means, the respective first vector $u$, $\hat{u}$ and the respective second vector $v$, $\hat{v}$ are learned.

An example for a PEFT method that updates the biases instead of the weights is BitFit: E. B. Zaken, S. Ravfogel, and Y. Goldberg, "Bitfit: Simple parameter-efficient fine-tuning for transformer-based masked language-models," 2022.

The PEFT methods may introduce diversity in the pool of experts of a same category, by using experts with different expressive power.

For LoRA, experts with different ranks may be used. For ETHER+ a scaling term $\lambda$ may be used that scales the boundary of the second transformation, such that

$$H = I - \lambda(uuT - vvT)$$

The routing mechanism may comprise be a one-stage router gate or a two-stages router gate.

The routing mechanism is described below by way of example of a modification of a Switch Transformer as the model 106 and a combination of a summation-based finetuning technique, e.g., LoRA, and multiplication-based finetuning technique, e.g., ETHER+.

The routing mechanism is applied with other models 106 than a Switch Transformer and other PEFT methods accordingly.

Figure 2 schematically depicts a part of a first example of the model 106 comprising an attention module 202 of the Switch Transformer and a one-stage router gate 204 for routing an output of the attention module 202 to a feed forward layer 206, to a first expert 208 and to a second expert 210. The one-stage router gate 204 is for example the router gating network.

The one-stage router gate 204 comprises one router 212 providing the output of the attention module 202 to the first expert 208. The one-stage router gate 204 comprises one router 214 providing the output of the attention module 202 to the second expert 210.

According to the first example of the model 106, the model 106 comprises an operation order leading to a final transformation over the pretrained weights W:

$$W' = H(W + AB)$$

Figure 3 schematically depicts a part of a second example of the model 106 comprising the attention module 202 of the Switch Transformer and the one-stage router gate 204 for routing the output of the attention module 202 to the feed forward layer 206, to the first expert 208 and to the second expert 210.

The one-stage router gate 204 comprises one router 212 providing the output of the attention module 202 to the first expert 208. The one-stage router gate 204 comprises one router 214 providing the output of the attention module 202 to the second expert 210.

According to the second example of the model 106, the model 106 comprises an operation order leading to a final transformation over the pretrained weights W:

$$W' = HW + AB$$

The summation-based PEFT method, e.g., LoRA, is used to determine the learnable matrix AB for adapting the first expert 208.

The multiplication based PEFT method, e.g., ETHER+, is used to determine the learnable matrix H for adapting the second expert 210.

The experts are an example for a combination of a summation-based module type and a multiplication-based module type, e.g., LoRA and ETHER+.

A routing mechanism for the one-stage router 204 gate may select simultaneously the first expert 208 and the second expert 210. This means, the logits of the attention module 202 are provided to both experts.

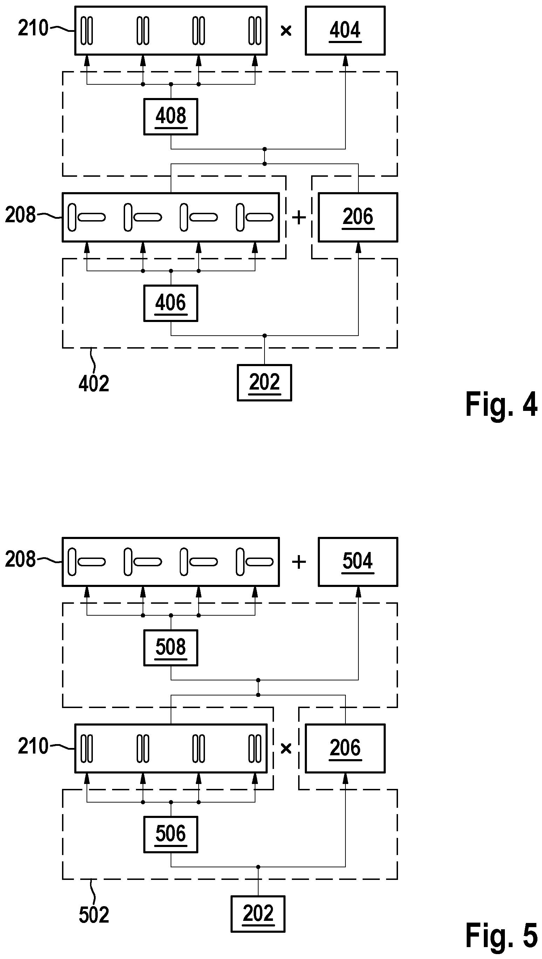

Figure 4 schematically depicts a part of a third example of the model 106 comprising the attention module 202 of the Switch Transformer and a first two-stages router gate 402 for routing the output of the attention module 202 to the feed forward layer 206 and to the first expert 208, and to route the output 404 of the feed forward layer 206 and the first expert 208 to the second expert 210. The first two-stages router gate 402 is for example the router gating network.

The first two-stages router gate 402 comprises one router 406 providing the output of the attention module 202 to the first expert 208. The first two-stages router gate 402 comprises one router 408 providing the output of the first expert 208 and of the feed forward layer 206 to the second expert 210.

According to the third example of the model 106, the model 106 comprises an operation order leading to a final transformation over the pretrained weights W comprising $W'' = AB + W$ in the first stage, and $W'' = H(W')W'$ in the second stage.

The summation-based PEFT method, e.g., LoRA, is used to determine the learnable matrix AB for adapting the first expert 208.

The multiplication based PEFT method, e.g., ETHER+, is used to determine the learnable matrix H for adapting the second expert 210.

A routing mechanism for the first two-stages router gate 402 may select the first expert 208 and the second expert 210. This means, the logits of the attention module 202 are provided to the first expert 208 and the output of the first expert 208 and the feed forward layer 206 are provided to the second expert 210.

Figure 5 schematically depicts a part of a fourth example of the model 106 comprising the attention module 202 of the Switch Transformer and a second two-stages router gate 502 for routing the output of the attention module 202 to the feed forward layer 206 and to the second expert 210, and to route the output 504 of the feed forward layer 206 and the second expert 210 to the first expert 208. The second two-stages router gate 502 is for example the router gating network.

The second two-stages router gate 502 comprises one router 506 providing the output of the attention module 202 to the second expert 210. The second two-stages router gate 502 comprises one router 508 providing the output of the second expert 210 and of the feed forward layer 206 to the first expert 208.

According to the fourth example of the model 106, the model 106 comprises an operation order leading to a final transformation over the pretrained weights W comprising $W' = HW$ in the first stage, and $W'' = AB + W'$ in the second stage.

The summation-based PEFT method, e.g., LoRA, is used to determine the learnable matrix AB for adapting the first expert 208.

The multiplication based PEFT method, e.g., ETHER+, is used to determine the learnable matrix H for adapting the second expert 210.

A routing mechanism for the second two-stages router gate 502 may select the first expert 208 and the second expert 210. This means, the logits of the attention module 202 are provided to the second expert 210 and the output of the second expert 210 and the feed forward layer 206 are provided to the first expert 208.

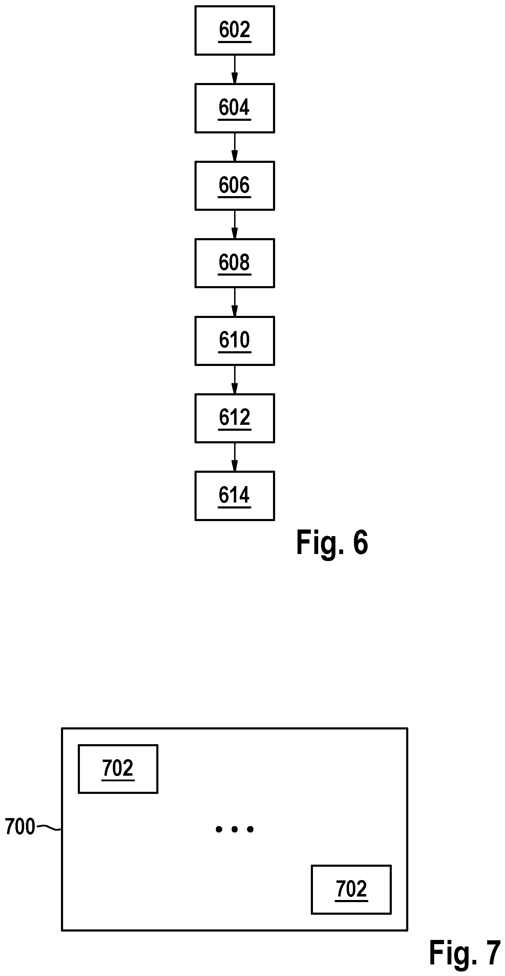

Figure 6 schematically depicts a flow chart comprising steps of the method for adapting the model 106 to tasks.

Exemplary tasks are

outputting, depending on different types of input data, a classification,
outputting, depending on different types of input data, a digital image,
outputting, depending on different types of input data, audio data,
outputting, depending on different types of input data video data, or
outputting, depending on different types of input data, virtual sensor data.

Examples for the different types of input data may be input data of the type

text,
digital image,
audio data,
video data,
sensor data,
operating quantity of the technical system 108.

The method comprises a step 602.

The step 602 comprises providing the model 106 and experts and a router gate for the experts. An expert in this context may be a neural network. The router gate may be the router gating network. The model 106 may be the neural network.

The model 106 comprises layers $l_i$. A layer $l_i$ is configured to map a multidimensional input $x_i$ of the layer $l_i$ depending on weights $W_i$ and an optional bias $b_i$ to a multidimensional output:

$$y_i = W_i^T x_i + b_i$$

The weights $W_i$ comprise vectors $w_{i,j}$ that comprise a respective subset of the weights $W_i$ that weighs the elements of the multidimensional input $x_i$ for a dimension j of the output $y_{i,j}$ of the layer $l_i$.

The experts are configured for transforming the weights of the model 106.

The layers $l_i$ are configured to output logits.

The experts are configured to output logits.

The router gate is configured to route logits to the experts.

The router gate is for example configured to route the output logits of one of the layers $l_i$ before the last layer $l_n$ of the model 106 to at least one of the experts.

The router gate is for example configured to route the output logits of one of the experts to at least one other expert of the experts.

Whether the logits from at least one of the layers $l_i$ or from at least one of the experts are routed to the respective expert, or the logits from at least one of the layers $l_i$ and from at least one of the experts are routed to the respective expert depends on the type of router gate. For the first expert 208 and the second expert 210, the router gate may be the one-stage router gate 204 or the first two-stage router gate 402, or the second two-stage router gate 502. The method is not limited to one-stage or two-stage router gates. The router gate may be a multiple stage router gates with more than three stages. The method is not limited to two experts. The method may comprise providing three or more experts.

The method comprises a step 604.

In the step 604 training data is provided.

The training data comprises pairs of an input of the model 106 and a ground truth for an output of the model 106. The input of the model 106 may comprise or represent the information about the technical system 108. The output of the model 106 may be the output for operating the technical system 108.

The training data is provided according to the tasks.

For the task of classifying a sensor signal, the input for example represents or comprises a sensor signal, and the output and the ground truth for example represents or comprises a classification of the sensor signal.

The input may be text, e.g., a description of the sensor data, representing the sensor signal. The input may be a technical quantity of the technical system 108 characterizing the sensor signal.

For the task of generating content, e.g. a digital image or audio signal, the input for example represents or comprises text, and the output and the ground truth for example represents or comprises a digital image and/or or an audio signal.

For the task of generating a digital image the input for example represents or comprises text and a semantic map, and the output and the ground truth represents or comprises a digital image.

For the task of virtual sensing, the input for example represents or comprises at least one operating quantity of the technical system 108 and the output and the ground truth represents or comprises a sensor signal.

The method comprises a step 606.

The step 606 comprises training the experts and/or the router gate depending on the training data.

The router gate may be trained at the same time as the experts. The router gate and the experts may be trained separately.

The experts are associated with a respective training method. For example, one expert is associated with a first training method and one expert is associated with a second training method.

The respective expert is trained with the training method associated with the respective expert.

The first training method is for example a summation-based training method. The summation-based PEFT method is an example for the summation-based training method. The second training method is for example a multiplication-based training method. The multiplication-based PEFT method is an example for the multiplication-based training method.

The first training method and the second training method can work together. This means for example, that training the first expert with the first training method maintains the second expert unchanged and training the second expert with the second training method maintains the first expert unchanged.

The pretrained weights W of the model 106 are maintained unchanged in the training. This means the matrix W remains unchanged. It is not required that all of the experts that are present in the model 106 are learnable. The learnable experts are trained. Other experts may remain unchanged.

To allow for further flexibility, the training may comprise learning a parameter of expert.

In the case of LORA, the parameter may be the rank of the learnable matrix AB.

This means, the smaller the dimension of the matrices A and B forming the learnable AB are, the lower is the rank of the learnable matrix AB.

In the case of ETHER+, the parameter may be the Frobenius distance with respect to the identity matrix.

In the case of ETHER+, the parameter may be a scaling parameter A that allows to control the transformation such as in $H = I - \lambda(uu^T - vv^T)$.

Notice that if $\lambda = 1$ it becomes the ETHER+ without parameter $\lambda$.

The training may be applied on any linear layer of the model 106. The training may make use of different PEFT modules, i.e., modules that are configured to execute a respective PEFT method.

In case of the neural network implementing the expert, training the experts depending on the training data comprises learning the weights of the neural network implementing the expert. In case of the neural network implementing the router gate, training the router gate depending on the training data comprises learning the weights of the neural network implementing the router gate.

The method comprises a step 608.

In the step 608 an input of the model 106 that comprises or represents information about the task is received.

According to an example, the input comprises or represents information about the technical system 108.

The method comprises a step 610.

In the step 610 an output of the adapted model 106 that the adapted model 106 outputs for the received input of the model 106 is determined.

According to an example, the output comprises or represents an output for operating the technical system 108.

The method comprises a step 612.

In the step 612, the output of the adapted model 106 is output.

According to an example, the output is output for operating the technical system 108 depending on the output of the adapted model 106.

The method may comprise a step 614.

In the step 614, the technical system 108 is operated depending on the output of the adapted model 106.

For example, the technical system 108 is the robot, in particular a vehicle. For example, the input is a digital image, e.g., comprising an object representing a traffic participant or infrastructure.

For example, the output is a classification of the object. The robot may be operated to move the robot on a trajectory that is determined depending on the classification of the object, e.g., to avoid the object or to drive over the object.

For example, the technical system 108 is the computer controlled machine. The computer controlled machine may be operated to produce a workpiece depending on the output of the model 106. The computer controlled machine may comprise a human machine interface or a machine to machine interface. The computer controlled machine may be operated receive the input via the interface and/or to output the output of the model 106 via the interface.

Figure 7 schematically depicts a data structure 700 for adapting the model 106 to tasks.

The data structure 700 is for example a computer implemented data structure.

The data structure 700 comprises at least one data field 702 for

the model 106,
the input to the router gate,
the output of the first expert 208,
the output of the second expert 210,
a modified layer determined by modifying the model 106 depending on the output of the experts,
for training the first expert 208 with the first training method depending on the output of the model 106,
for training the second expert 210 with the second training method depending on the output of the model 106.

The data structure 700 may comprise at least one data field 702 for maintaining the weights and the second expert 210 unchanged in the training with the first training method.

The data structure 700 may comprise at least one data field 702 for maintaining the weights and the first expert 208 unchanged in the training with the second training method.

**Claims**

1. A method for adapting a model (106) to tasks, **characterized in that** the method comprises providing (602) the model (106), wherein the model (106) comprises an in particular linear layer for mapping a multidimensional input of the layer depending on weights to a multidimensional output of the layer, wherein the model (106) comprises experts (208, 210) and a router gate (204, 402, 502) for adapting the model (106) to different tasks, wherein the method comprises providing (604) the input to the router gate (204, 402, 502), determining an output of the experts (208, 210) depending on an output of the router gate (204, 402, 502) in response to the input, modifying the model (106) depending on the output of the experts (208, 210), mapping the input with the modified layer to the output of the model (106), training (606) a first expert (208) of the experts with a first training method depending on the output of the model (106), and training (606) a second expert (210) of the experts with a second training method depending on the output of the model (106), and maintaining the weights and the second expert (210) unchanged in the training with the first training method, and maintaining the weights and the first expert (208) unchanged in the training with the second training method.

2. The method according to claim 1, **characterized in that** modifying the model (106) comprises determining the output of the first expert (208) weight-wise, modifying the weights of the layer depending on a weight-wise summation of the weights with the output of the first expert (208), and determining the output of the model (106) depending on the modified weights.

3. The method according to claim 1, **characterized in that** modifying the model (106) comprises determining a multidimensional output of the first expert (208) according to the dimension of the multidimensional output of the layer, and determining the output of the model (106) depending on a dimension-wise summation of the multidimensional output of layer and the multidimensional output of the first expert (208).

4. The method according to one of the preceding claims, **characterized in that** modifying the model (106) comprises determining the output of the second expert (210) weight-wise, modifying the weights of the layer depending on a weight-wise multiplication of the weights with the output of the second expert (210), and determining the output of the model (106) depending on the modified weights.

5. The method according to one of the claims 1 to 3, **characterized in that** modifying the model (106) comprises determining a multidimensional output of the second expert (210) according to the dimension of the multidimensional output of the layer, and determining the output of the model (106) depending on a dimension-wise summation of the multidimensional output of layer and the multidimensional output of the second expert (210).

6. The method according to one of the preceding claims, **characterized by** training the router gate (204, 402, 502) depending on the output of the model (106).

7. The method according to one of the preceding claims, **characterized in that** the output of the first expert (208) represents a transformation matrix for a matrix addition with a weight matrix representing the weights, wherein training the first expert (208) comprises learning the transformation matrix.

8. The method according to claim 7, **characterized by** providing multiple experts with a respective transformation matrix for the matrix addition, wherein the ranks of the transformation matrices provided for the matrix addition differ from each other.

9. The method according to one of the preceding claims, **characterized in that** the output of the second expert (210) represents a transformation matrix for a matrix multiplication with a weight matrix representing the weights, wherein training the second expert (210) comprises learning the transformation matrix.

10. The method according to claim 9, characterized providing multiple experts with a common matrix for the matrix multiplication, providing the multiple experts with different scalars for scaling the common transformation matrix to the transformation matrix, and training the scalar of the experts depending on the output of the model (106).

11. The method according to one of the preceding claims, **characterized in that** the model (106) comprises a plurality of in particular linear layers, wherein adapting the model (106) comprises adapting the layers with respective experts and respective router gates, wherein adapting the layers comprises providing the input of the respective layer to the router gate of the respective layer, determining an output of the experts of the respective layer depending on an output of the router gate of the respective layer in response to the input of the respective layer, and modifying the model (106) depending on the output of the experts of the respective layer, and training the experts of the respective layers of the model (106).

12. The method according to one of the preceding claims, **characterized in that** the model (106) is configured to determine the input depending on an input of the model (106), wherein the training data comprises pairs of an input of the model (106) and a ground truth for the output of the model (106), wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

13. The method according to one of the preceding claims, wherein the method comprises receiving (608) an input of the model (106) that comprises or represents information about a technical system (108), determining (610) an output of the adapted model (106) that the adapted model (106) outputs for the input of the model (106), and outputting (612) the output of the adapted model (106) and/or operating (614) the technical system (108) depending on the output or the adapted model (106).

14. A device (100) for adapting a model to tasks, **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

15. A computer program, **characterized in that** the computer program comprises instructions that are executable by a computer and that, when executed by the computer, cause the computer to execute the method according to one of the claims 1 to 13.

16. A data structure, in particular a computer implemented data structure, for adapting a model (106) to tasks, **characterized in that** the data structure comprises at least one data field for the model (106), wherein the model (106) comprises an in particular linear layer for mapping a multidimensional input of the layer depending on weights to a multidimensional output of the layer, wherein the model (106) comprises experts (208, 210) and a router gate (204, 402, 502) for adapting the model (106) to different tasks, wherein the data structure comprises at least one data filed for the input to the router gate (204, 402, 502), wherein the data structure comprises at least one data filed for an output of the experts (208, 210) determined depending on an output of the router gate (204, 402, 502) in response to the input, wherein the data structure comprises at least one data filed for a modified layer determined by modifying the model (106) depending on the output of the experts (208, 210), wherein the data structure comprises at least one data filed for training (606) a first expert (208) of the experts with a first training method depending on the output of the model (106), and wherein the data structure comprises at least one data filed for training (606) a second expert (210) of the experts with a second training method depending on the output of the model (106), and maintaining the weights and the second expert (210) unchanged in the training with the first training method, and maintaining the weights and the first expert (208) unchanged in the training with the second training method.

**Amended claims in accordance with Rule 137(2) EPC.**

1. A method for adapting a model (106) to tasks, wherein the method comprises providing (602) the model (106), wherein the model (106) comprises an in particular linear layer for mapping a multidimensional input of the layer depending on weights to a multidimensional output of the layer, wherein the model (106) comprises experts (208, 210) and a router gate (204, 402, 502) for adapting the model (106) to different tasks, wherein the method comprises providing (604) the input to the router gate (204, 402, 502), determining an output of the experts (208, 210) depending on an output of the router gate (204, 402, 502) in response to the input, modifying the model (106) depending on the output of the experts (208, 210), mapping the input with the modified layer to the output of the model (106), **characterized by** training (606) a first expert (208) of the experts with a first training method depending on the output of the model (106) for adapting the first expert (208) to one of the tasks of outputting, depending on input data of one of the types text, digital image, audio data, video data, sensor data, operating quantity of a technical system (108), one of a classification, a digital image, video data, or virtual sensor data, and either training (606) a second expert (210) of the experts with a second training method depending on the output of the model (106) for adapting the second expert (210) to another one of the tasks of outputting, depending on input data of one of the types text, digital image, audio data, video data, sensor data, operating quantity of a technical system (108), one of a classification, a digital image, video data, or virtual sensor data, or training (606) a second expert (210) of the experts with a second training method depending on the output of the model (106) for adapting the second expert (210) to the one of the tasks of outputting, depending on input data of another one of the types text, digital image, audio data, video data, sensor data, operating quantity of a technical system (108), one of a classification, a digital image, video data, or virtual sensor data, and maintaining the weights and the second expert (210) unchanged in the training with the first training method, and maintaining the weights and the first expert (208) unchanged in the training with the second training method.

2. The method according to claim 1, **characterized in that** modifying the model (106) comprises determining the output of the first expert (208) weight-wise, modifying the weights of the layer depending on a weight-wise summation of the weights with the output of the first expert (208), and determining the output of the model (106) depending on the modified weights.

3. The method according to claim 1, **characterized in that** modifying the model (106) comprises determining a multidimensional output of the first expert (208) according to the dimension of the multidimensional output of the layer, and determining the output of the model (106) depending on a dimension-wise summation of the multidimensional output of layer and the multidimensional output of the first expert (208).

4. The method according to one of the preceding claims, **characterized in that** modifying the model (106) comprises determining the output of the second expert (210) weight-wise, modifying the weights of the layer depending on a weight-wise multiplication of the weights with the output of the second expert (210), and determining the output of the model (106) depending on the modified weights.

5. The method according to one of the claims 1 to 3, **characterized in that** modifying the model (106) comprises determining a multidimensional output of the second expert (210) according to the dimension of the multidimensional output of the layer, and determining the output of the model (106) depending on a dimension-wise summation of the multidimensional output of layer and the multidimensional output of the second expert (210).

6. The method according to one of the preceding claims, **characterized by** training the router gate (204, 402, 502) depending on the output of the model (106).

7. The method according to one of the preceding claims, **characterized in that** the output of the first expert (208) represents a transformation matrix for a matrix addition with a weight matrix representing the weights, wherein training the first expert (208) comprises learning the transformation matrix.

8. The method according to claim 7, **characterized by** providing multiple experts with a respective transformation matrix for the matrix addition, wherein the ranks of the transformation matrices provided for the matrix addition differ from each other.

9. The method according to one of the preceding claims, **characterized in that** the output of the second expert (210) represents a transformation matrix for a matrix multiplication with a weight matrix representing the weights, wherein training the second expert (210) comprises learning the transformation matrix.

10. The method according to claim 9, characterized providing multiple experts with a common matrix for the matrix multiplication, providing the multiple experts with different scalars for scaling the common transformation matrix to the transformation matrix, and training the scalar of the experts depending on the output of the model (106).

11. The method according to one of the preceding claims, **characterized in that** the model (106) comprises a plurality of in particular linear layers, wherein adapting the model (106) comprises adapting the layers with respective experts and respective router gates, wherein adapting the layers comprises providing the input of the respective layer to the router gate of the respective layer, determining an output of the experts of the respective layer depending on an output of the router gate of the respective layer in response to the input of the respective layer, and modifying the model (106) depending on the output of the experts of the respective layer, and training the experts of the respective layers of the model (106).

12. The method according to one of the preceding claims, **characterized in that** the model (106) is configured to determine the input depending on an input of the model (106), wherein the training data comprises pairs of an input of the model (106) and a ground truth for the output of the model (106), wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

13. The method according to one of the preceding claims, wherein the method comprises receiving (608) an input of the model (106) that comprises or represents information about a technical system (108), determining (610) an output of the adapted model (106) that the adapted model (106) outputs for the input of the model (106), and outputting (612) the output of the adapted model (106) and/or operating (614) the technical system (108) depending on the output or the adapted model (106).

14. A device (100) for adapting a model to tasks, **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

15. A computer program, **characterized in that** the computer program comprises instructions that are executable by a computer and that, when executed by the computer, cause the computer to execute the method according to one of the claims 1 to 13.

16. A data structure, in particular a computer implemented data structure, for adapting a model (106) to tasks, wherein the data structure comprises at least one data field for the model (106), wherein the model (106) comprises an in particular linear layer for mapping a multidimensional input of the layer depending on weights to a multidimensional output of the layer, wherein the model (106) comprises experts (208, 210) and a router gate (204, 402, 502) for adapting the model (106) to different tasks, wherein the data structure comprises at least one data filed for the input to the router gate (204, 402, 502), wherein the data structure comprises at least one data filed for an output of the experts (208, 210) determined depending on an output of the router gate (204, 402, 502) in response to the input, wherein the data structure comprises at least one data filed for a modified layer determined by modifying the model (106) depending on the output of the experts (208, 210), **characterized in that** the data structure comprises at least one data filed for training (606) a first expert (208) of the experts with a first training method depending on the output of the model (106) for adapting the first expert (208) to one of the tasks of outputting, depending on input data of one of the types text, digital image, audio data, video data, sensor data, operating quantity of a technical system (108), one of a classification, a digital image, video data, or virtual sensor data, and wherein the data structure comprises at least one data filed for either training (606) a second expert (210) of the experts with a second training method depending on the output of the model (106) for adapting the second expert (210) to another one of the tasks of outputting, depending on input data of one of the types text, digital image, audio data, video data, sensor data, operating quantity of a technical system (108), one of a classification, a digital image, video data, or virtual sensor data, or training (606) a second expert (210) of the experts with a second training method depending on the output of the model (106) for adapting the second expert (210) to the one of the tasks of outputting, depending on input data of another one of the types text, digital image, audio data, video data, sensor data, operating quantity of a technical system (108), one of a classification, a digital image, video data, or virtual sensor data, and maintaining the weights and the second expert (210) unchanged in the training with the first training method, and maintaining the weights and the first expert (208) unchanged in the training with the second training method.

**Fig. 1**

**Fig. 2**

**Fig. 3**

**Fig. 4**

**Fig. 5**

Fig. 6

Fig. 7

Europäisches
Patentamt

European
Patent Office

Office européen
des brevets

**EUROPEAN SEARCH REPORT**

**Application Number**

**EP 24 20 2638**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/159132 A1 (GOOGLE LLC [US]) 2 August 2024 (2024-08-02) * abstract * * page 1, line 16 - line 18 * * page 17, line 23 - line 28 * * page 6, line 28 - line 31 * * page 7, line 8 - line 12 * * page 7, line 18 - line 31 * * figure 1 * ----- | 1-16 | INV. G06F16/906 G06N3/00 G06N20/00 |
| X | Fedus William ET AL: "Switch Transformers: Scaling to Trillion Parameter Models with Simple and Efficient Sparsity", Journal of Machine Learning Research, 1 April 2022 (2022-04-01), pages 1-39, XP093244605, Retrieved from the Internet: URL:https://www.jmlr.org/papers/volume23/21-0998/21-0998.pdf * abstract * * Section 2 * * Section 2.1 * * Section 2.4 * * figure 2 * ----- | 1-16 | |
| A | US 2022/253680 A1 (ZHAO ZHE [US] ET AL) 11 August 2022 (2022-08-11) * the whole document * ----- | 1-16 | **TECHNICAL FIELDS SEARCHED (IPC)** G06F G06N |

The present search report has been drawn up for all claims

| Place of search | Date of completion of the search | Examiner |
|---|---|---|
| Berlin | 29 January 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2638

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | Publication date | Patent family member(s) | Publication date |
|---|---|---|---|
| WO 2024159132 A1 | 02-08-2024 | NONE | |
| US 2022253680 A1 | 11-08-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. A. JACOBS ; M. I. JORDAN ; S. J. NOWLAN ; G. E. HINTON**. Adaptive mixtures of local experts. *Neural Computation*, 1991, vol. 3, 79-87
- **W. FEDUS ; B. ZOPH ; N. SHAZEER**. *Switch transformers: Scaling to trillion parameter models with simple and efficient sparsity*, 2022
- **A. VASWANI ; N. SHAZEER ; N. PARMAR ; J. USZKOREIT ; L. JONES ; A. N. GOMEZ ; L. KAISER ; I. POLOSUKHIN**. *Attention is all you need*, 2023
- **E. J. HU ; Y. SHEN ; P. WALLIS ; Z. ALLEN-ZHU ; Y. LI ; S. WANG ; L. WANG ; W. CHEN**. LoRA: Low-rank adaptation of large language models. *ICLR*, 2022
- **D. J. KOPICZKO ; T. BLANKEVOORT ; Y. M. ASANO**. VeRA: Vector-based Random Matrix Adaptation. *arXiv:2310.11454*, October 2023
- **M. VALIPOUR ; M. REZAGHOLIZADEH ; I. KOBY-ZEV ; A. GHODSI**. DyLoRA: Parameter Efficient Tuning of Pre-trained Models using Dynamic Search-Free Low-Rank Adaptation. *arXiv:2210.07558*, April 2023

- **Q. ZHANG ; M. CHEN ; A. BUKHARIN ; P. HE ; Y. CHENG ; W. CHEN ; T. ZHAO**. Adaptive Budget Allocation for Parameter-Efficient Fine-Tuning. *ar-Xiv:2303.10512*, March 2023
- **S.-Y. LIU ; C.-Y. WANG ; H. YIN ; P. MOLCHANOV ; Y.-C. F. WANG ; K.-T. CHENG ; M.-H. CHEN**. *Dora: Weight-decomposed low-rank adaptation*, 2024
- **Z. QIU ; W. LIU ; H. FENG ; Y. XUE ; Y. FENG ; Z. LIU ; D. ZHANG ; A. WELLER ; B. SCHÖLKOPF**. Controlling text-to-image diffusion by orthogonal finetuning. *arXiv:2306.07280*, 2023
- **M. BINI ; K. ROTH ; Z. AKATA ; A. KHOREVA**. *Ether: Efficient finetuning of large-scale models with hyperplane reflections*, 2024
- **E. B. ZAKEN ; S. RAVFOGEL ; Y. GOLDBERG**. *Bitfit: Simple parameter-efficient fine-tuning for transformer-based masked language-models*, 2022